# FASCICULE DE BREVET EUROPEEN

(11) **EP 4 463 623 B1**
(45) Date de publication et mention de la délivrance du brevet: **05.11.2025**
(21) Numéro de dépôt: 23703514.2
(22) Date de dépôt: 06.01.2023
(51) Int. Cl.: F02K 1/72

(54) **INVERSEUR DE POUSSÉE COMPRENANT DES GRILLES MOBILES ET UNE MEMBRANE D'OBTURATION**
SCHUBUMKEHRVORRICHTUNG MIT BEWEGLICHEN KASKADEN UND EINER DICHTUNGSMEMBRAN
THRUST REVERSER COMPRISING MOVABLE CASCADES AND A SEALING MEMBRANE

(30) Priorité: 10.01.2022 FR 2200135
(43) Date de publication de la demande: 20.11.2024
(73) Titulaire: Safran Nacelles, 76700 Gonfreville-l'Orcher (FR)
(72) Inventeur: FERRIER, Gina, 77550 Moissy-Cramayel (FR); GONIDEC, Patrick, 77550 Moissy-Cramayel (FR); CHAPELAIN, Loïc, décédé (FR); RAMSTEIN, Edouard Marie Gabriel, 77550 Moissy-Cramayel (FR); BOILEAU, Patrick André, 77550 Moissy-Cramayel (FR)
(74) Mandataire: Brevalex
(86) Numéro de dépôt international: PCT/FR2023/050015
(87) Numéro de publication internationale: WO 2023/131762

(56) Documents cités:
- FR-A1- 3 076 864
- FR-A1- 3 087 848
- US-A- 3 330 115

## Description

### Domaine technique

L'invention se rapporte au domaine des nacelles et des inverseurs de poussée pour ensemble propulsif d'aéronef, et, plus particulièrement, aux nacelles équipées d'inverseurs à grilles mobiles.

### État de la technique antérieure

Les inverseurs de poussée sont des dispositifs permettant de dévier vers l'avant le flux d'air traversant l'ensemble propulsif, de manière à raccourcir les distances d'atterrissage, et à limiter la sollicitation des freins sur les atterrisseurs.

Des inverseurs de poussée selon l'état de la technique sont connus par les documents FR3087848A1 et US3330115A.

Les inverseurs à grilles actuellement exploités dans le secteur aéronautique comprennent un cadre avant formant avec les grilles une partie fixe de l'inverseur, destinée à être reliée à un carter de turbomachine.

Des développements techniques plus récents ont permis de mettre au point des inverseurs à grilles mobiles, tels que décrits par exemple dans les documents FR2981989A1, FR2999239A1, FR3002785A1 et FR3073572A1.

Par rapport à un inverseur conventionnel à grilles fixes, la mobilité des grilles permet de réduire la longueur de la nacelle, et, par conséquent, de diminuer sa masse ainsi que la traînée qu'elle génère.

Dans les conceptions à grilles fixes ou mobiles, pour dévier au moins une partie du flux secondaire vers les grilles, l'inverseur est également équipé de volets d'obturation, qui, lorsqu'ils sont déployés, obturent au moins partiellement la veine secondaire. De manière connue, cela force l'air du flux secondaire à traverser les grilles, ce qui génère alors le flux d'air de contre-poussée vers l'avant.

Les volets sont généralement montés pivotants sur la paroi radialement interne des capots d'inverseur, cette paroi délimitant la veine secondaire radialement vers l'extérieur. Ainsi, des renfoncements sont prévus dans cette paroi radialement interne des capots d'inverseur afin de recevoir les volets d'obturation en position escamotée, telle qu'adoptée en jet direct. Néanmoins, en jet direct, la présence des renfoncements et des volets est source de perturbations aérodynamiques sur le flux secondaire. De plus, cette présence empêche localement l'implantation d'un panneau acoustique sur la paroi radialement interne des capots d'inverseur.

Pour apporter une solution technique à ces problèmes, dans les configurations à grilles fixes, il a été proposé de remplacer les volets par une ou plusieurs membranes d'obturation. Une telle conception est par exemple connue du document FR3076864A1. Cependant, ces solutions à membranes d'obturation sont dédiées aux inverseurs à grilles fixes, et non aux inverseurs à grilles mobiles. De plus, ces solutions restent perfectibles, notamment en matière de facilité de mise en œuvre et de fiabilité de déploiement.

### Exposé de l'invention

L'invention a tout d'abord pour objet un inverseur de poussée pour ensemble propulsif d'aéronef, l'inverseur comprenant une structure fixe équipée d'une paroi de délimitation radialement interne d'une veine secondaire de l'ensemble propulsif destinée à être traversée par un flux secondaire, l'inverseur comprenant également une structure mobile comportant au moins un capot d'inverseur et au moins un ensemble de grilles de déviation, ledit au moins un ensemble de grilles comprenant une pluralité de grilles de déviation ainsi qu'une structure arrière de support des grilles sur laquelle est fixée une extrémité arrière de la pluralité de grilles de déviation, et une structure avant de support des grilles sur laquelle est fixée une extrémité avant de la pluralité de grilles de déviation, la structure mobile étant déplaçable en translation par rapport à la structure fixe selon un axe central longitudinal de l'inverseur, entre une position avancée de poussée directe et une position reculée d'inversion de poussée.

Selon l'invention, l'inverseur de poussée comprend au moins une membrane d'obturation conçue pour dévier au moins une partie du flux secondaire vers ledit au moins un ensemble de grilles de déviation, lorsque la structure mobile se trouve en position reculée d'inversion de poussée.

De plus, l'inverseur comprend également, associés à ladite au moins une membrane d'obturation :
- des premiers moyens d'accrochage souples reliant une première extrémité de la membrane à la structure fixe de l'inverseur, les premiers moyens d'accrochage comprenant à l'une de leurs extrémités des premiers moyens de fixation sur la structure fixe de l'inverseur,
- des seconds moyens d'accrochage reliant une seconde extrémité de la membrane, opposée à la première extrémité, à la structure fixe ou à la structure mobile, les seconds moyens d'accrochage étant fixés sur la paroi de délimitation radialement interne de la veine secondaire, ou guidés par des moyens de guidage internes fixés à cette même paroi de délimitation radialement interne.

En outre, l'ensemble formé par la membrane et les premiers et seconds moyens d'accrochage est guidé par des moyens de guidage avant solidaires de la structure avant de support de grilles, et guidé par des moyens de guidage arrière solidaires de la structure arrière de support de grilles.

L'inverseur est réalisé de sorte que dans la position avancée de poussée directe de la structure mobile, au moins une partie de la membrane d'obturation s'étend le long de l'ensemble de grilles de déviation.

L'inverseur selon l'invention intègre une ou plusieurs membranes d'obturation, qui confèrent des performances aérodynamiques et acoustiques élevées à l'ensemble propulsif équipé d'un tel inverseur. En outre, la conception spécifique à l'invention offre une simplicité de mise en œuvre de la membrane d'obturation lors du déplacement de la structure mobile vers sa position reculée d'inversion de poussée, conduisant au déroulement de cette membrane dans le flux secondaire. Elle offre également une grande fiabilité de déploiement de cette membrane, notamment grâce à la coopération entre les seconds moyens d'accrochage et la paroi de délimitation radialement interne de la veine secondaire.

L'invention prévoit de préférence au moins l'une des caractéristiques techniques optionnelles suivantes, prises isolément ou en combinaison.

De préférence, dans la position avancée de poussée directe de la structure mobile, les moyens de guidage avant se trouvent en amont des premiers moyens de fixation des premiers moyens d'accrochage souples. De plus, l'inverseur est réalisé également de sorte que durant au moins une partie du déplacement de la structure mobile vers la position reculée d'inversion de poussée, ledit ensemble se déroule avec les premiers moyens d'accrochage en appui sur les moyens de guidage avant, et avec la membrane d'obturation en appui sur les moyens de guidage arrière. D'autres cinématiques peuvent néanmoins être envisagées, en fonction notamment du positionnement relatif des moyens de guidage et des moyens d'accrochage, ainsi qu'en fonction de la longueur de la membrane.

De préférence, les seconds moyens d'accrochage comprennent des câbles.

De préférence, les seconds moyens d'accrochage comprennent des bielles dont une première extrémité de chacune d'elles est montée sur la paroi de délimitation radialement interne de la veine secondaire, de préférence par l'intermédiaire d'une liaison pivot ou d'une liaison rotule. Ces bielles permettent de renforcer encore davantage la fiabilité du déroulement de la membrane d'obturation, en évitant notamment qu'elle reste plaquée à l'intérieur du capot d'inverseur ou dans la structure de support arrière de grilles.

De préférence, chaque bielle est conçue pour se déplacer d'une position en saillie dans la veine secondaire, adoptée lorsque la structure mobile occupe sa position avancée de poussée directe, à une position rabattue vers l'aval, adoptée lorsque la structure mobile occupe sa position reculée d'inversion de poussée, et, de plus, des moyens élastiques de poussent chaque bielle vers sa position rabattue.

De préférence, les câbles précités coopèrent avec les bielles, chaque câble étant fixé à une seconde extrémité de l'une des bielles associée à ce câble, ou traversant cette bielle associée pour être fixé sur la paroi de délimitation radialement interne de la veine secondaire.

De préférence, les premiers moyens d'accrochage souples comprennent des câbles.

De préférence, les moyens de guidage avant, arrière et internes comprennent au moins un galet, et/ou au moins un cylindre rotatif, et/ou au moins un axe fixe.

De préférence, plusieurs membranes d'obturation sont associées à ladite pluralité de grilles mobiles, les membranes se succédant selon une direction circonférentielle de l'inverseur. Eventuellement, ces membranes peuvent se chevaucher partiellement lorsqu'elles adoptent leur configuration déployée d'obturation. Alternativement, il peut être prévu une unique membrane d'obturation associée à chaque ensemble de grilles de déviation.

Lorsqu'il est prévu plusieurs membranes d'obturation, celles-ci peuvent éventuellement être reliées les unes aux autres au niveau de leurs extrémités radialement internes en configuration déployée d'obturation. Néanmoins, elles peuvent alternativement ou simultanément être reliées les unes aux autres à d'autres endroits que leurs extrémités radialement internes, sans sortir du cadre de l'invention.

De préférence, chaque membrane d'obturation présente une forme générale trapézoïdale. Néanmoins, d'autres formes peuvent être adoptées, comme une forme générale rectangulaire conduisant à un plus grand chevauchement dans la configuration déployée d'obturation. D'autres formes particulières peuvent également être envisagées pour une ou plusieurs membranes d'obturation, de manière à les adapter localement à la géométrie des éléments environnants de l'ensemble propulsif.

De préférence, les premiers moyens de fixation des premiers moyens d'accrochage souples sont agencés sur ou à proximité d'un bord de déviation faisant partie intégrante de la structure fixe de l'inverseur.

L'invention a également pour objet une nacelle pour ensemble propulsif d'aéronef, comprenant au moins un capot de soufflante, ainsi qu'un inverseur de poussée tel que décrit ci-dessus.

Enfin, l'invention a également pour objet un ensemble propulsif pour aéronef, comprenant une turbomachine et une telle nacelle.

D'autres avantages et caractéristiques de l'invention apparaîtront dans la description détaillée non limitative ci-dessous.

### Brève description des dessins

La description détaillée qui suit fait référence aux dessins annexés sur lesquels :
[Fig. 1] est une demi-vue schématique en coupe longitudinale d'un ensemble propulsif, comprenant un inverseur de poussée selon l'invention, représenté en configuration de poussée directe ;
[Fig. 2] est une demi-vue schématique en coupe longitudinale de l'ensemble propulsif montré sur la figure 1, avec l'inverseur représenté en configuration d'inversion de poussée ;
[Fig. 3] est une vue éclatée en perspective d'une partie de la nacelle de l'ensemble propulsif montré sur les figures précédentes, montrant en particulier les éléments de l'inverseur de poussée ;
[Fig. 4] est une vue axiale des structures arrière de support des grilles montrées sur la figure précédente ;
[Fig. 5] est une vue partielle en perspective, plus détaillée, d'une partie de l'inverseur montré sur les figures précédentes ;
[Fig. 6] est une vue partielle en perspective, plus détaillée, d'une partie avant de la nacelle montrée sur les figures précédentes, avec un seul capot de soufflante représenté ;
[Fig. 7] est une demi-vue schématique en coupe longitudinale d'une partie arrière de l'ensemble propulsif montré sur la figure 1, plus détaillée, et toujours avec l'inverseur en configuration de poussée directe ;
[Fig.7A] est une demi-vue schématique en coupe longitudinale similaire à celle de la vue précédente, avec l'inverseur se trouvant dans une configuration intermédiaire entre la configuration de poussée directe, et la configuration d'inversion de poussée ;
[Fig. 8] est une demi-vue schématique en coupe longitudinale d'une partie arrière de l'ensemble propulsif montré sur la figure 2, plus détaillée, et toujours avec l'inverseur en configuration d'inversion de poussée ;
[Fig. 9] est une vue en perspective de l'inverseur montré sur les figures 1 et 7, représenté en configuration de poussée directe ;
[Fig. 10] est une vue en perspective de l'inverseur montré sur la figure 8, représenté en configuration d'inversion de poussée ;
[Fig. 11] est une vue schématique de l'une des bielles de raccordement de la membrane d'obturation de l'inverseur montré sur les figures précédentes, avec la bielle montrée dans une position en saillie telle qu'adoptée en configuration de poussée directe de l'inverseur ;
[Fig. 12] est une vue schématique de la bielle de raccordement montrée sur la figure 11, représentée dans une position rabattue telle qu'adoptée en configuration d'inversion de poussée de l'inverseur ;
[Fig. 13] est une vue en perspective de la bielle de raccordement montrée sur les figures 11 et 12, dans sa position en saillie ;
[Fig. 14] est une vue de dessous d'une partie de l'inverseur, selon un autre mode de réalisation préféré de l'invention ;
[Fig. 15] est une vue de dessous similaire à celle de la figure précédente, selon une alternative de réalisation ;
[Fig. 16] est une vue schématique de face d'une partie de l'inverseur montré sur la figure 14 ;
[Fig. 17] est une vue schématique de face similaire à celle de la figure précédente, selon une alternative de réalisation ;
[Fig. 18] est une vue schématique de dessus d'une partie de l'inverseur montré sur la figure 14 ;
[Fig. 19] est une vue schématique de dessus similaire à celle de la figure précédente, selon une alternative de réalisation ;
[Fig. 20] est une demi-vue schématique en coupe longitudinale similaire à celle de la figure 7, selon un autre mode de réalisation préféré de l'invention et avec l'inverseur se trouvant dans la configuration de poussée directe ;
[Fig. 21] est une demi-vue schématique en coupe longitudinale similaire à celle de la figure précédente, selon encore un autre mode de réalisation préféré de l'invention et avec l'inverseur se trouvant dans la configuration de poussée directe ;
[Fig. 22] est une demi-vue schématique en coupe longitudinale similaire à celle de la figure précédente, avec l'inverseur se trouvant dans la configuration d'inversion de poussée ;
[Fig. 23] est une demi-vue schématique en coupe longitudinale similaire à celle de la figure 21, selon encore un autre mode de réalisation préféré de l'invention et avec l'inverseur se trouvant dans la configuration de poussée directe ;
[Fig. 24] est une demi-vue schématique en coupe longitudinale similaire à celle de la figure précédente, avec l'inverseur se trouvant dans une configuration intermédiaire entre la configuration de poussée directe, et la configuration d'inversion de poussée.

### Description des modes de réalisation

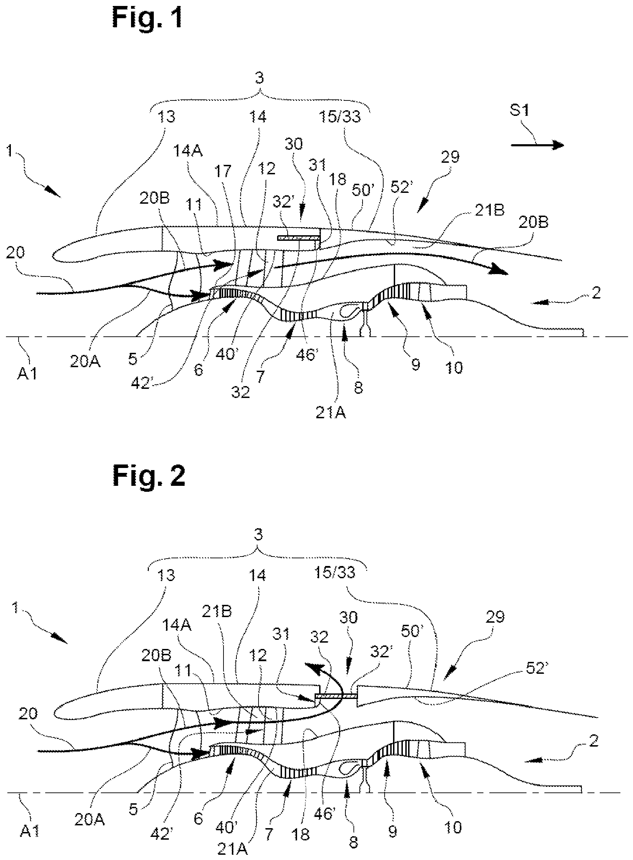

Il est représenté sur les figures 1 et 2 un ensemble propulsif 1 d'aéronef, présentant un axe central longitudinal A1.

Par la suite, les termes « amont » et « aval » sont définis relativement à un sens général S1 d'écoulement des gaz à travers l'ensemble propulsif 1, le long de l'axe A1 lorsque celui-ci génère une poussée. Ces termes « amont » et « aval » pourraient respectivement être substitués par les termes « avant » et « arrière », avec la même signification.

L'ensemble propulsif 1 comprend une turbomachine 2, une nacelle 3 ainsi qu'un mât (non représenté), destiné à relier l'ensemble propulsif 1 à une aile (non représentée) de l'aéronef.

La turbomachine 2 est dans cet exemple un turboréacteur à double flux et à double corps comprenant, de l'avant vers l'arrière, une soufflante 5, un compresseur basse pression 6, un compresseur haute pression 7, une chambre de combustion 8, une turbine haute pression 9 et une turbine basse pression 10. Les compresseurs 6 et 7, la chambre de combustion 8 et les turbines 9 et 10 forment un générateur de gaz. Le turboréacteur 2 est doté d'un carter de soufflante 11 relié au générateur de gaz par des bras structuraux 12. La nacelle 3 comprend une section avant formant une entrée d'air 13, une section médiane 14 qui comporte deux capots de soufflante 14A enveloppant le carter de soufflante 11, et une section arrière 15.

En fonctionnement, un écoulement d'air 20 pénètre dans l'ensemble propulsif 1 par l'entrée d'air 13, traverse la soufflante 5 puis se divise en un flux primaire 20A et un flux secondaire 20B. Le flux primaire 20A s'écoule dans une veine primaire 21A de circulation de gaz traversant le générateur de gaz. Le flux secondaire 20B s'écoule dans une veine secondaire 21B entourant le générateur de gaz. La veine secondaire 21B est délimitée radialement vers l'intérieur par un carénage interne fixe qui enveloppe le générateur de gaz. Dans cet exemple, le carénage interne fixe comprend un premier tronçon 17 appartenant à la section médiane 14, et un deuxième tronçon 18 s'étendant vers l'arrière à partir du premier tronçon 17, de manière à former une partie de la section arrière 15.

Ce second tronçon 18 fait partie intégrante d'une structure fixe d'un inverseur de poussée qui sera décrit ci-après. Ce même tronçon sera par la suite dénommé paroi 18 de délimitation radialement interne de la veine secondaire 21B.

Radialement vers l'extérieur, la veine secondaire 21B est délimitée par le carter de soufflante 11, et, dans la configuration de la figure 1, par un ou plusieurs capots mobiles d'inverseur 33 formant une partie de la section arrière 15 de la nacelle 3, qui seront décrits ultérieurement. Plus précisément, entre le carter de soufflante 11 et les capots d'inverseur 33, il est prévu une virole extérieure 40' d'un carter intermédiaire 42', ce dernier comprenant les bras structuraux 12 précités, dont l'extrémité radialement externe est fixée sur cette virole 40'. Celle-ci participe donc également à délimiter la veine secondaire 21B radialement vers l'extérieur, en étant située dans le prolongement axial aval du carter de soufflante 11.

La nacelle 3 comporte donc un inverseur de poussée 30 centré sur l'axe A1 et comprenant d'une part une structure fixe 31, et d'autre part une structure 29 mobile par rapport à la structure fixe 31.

La structure fixe 31 de l'inverseur comprend un bord de déviation 46' porté fixement en aval par la virole extérieure 40' du carter intermédiaire. D'ailleurs, cette virole 40' ainsi que le carter de soufflante 11 peuvent être considérés comme faisant partie de la structure fixe 31 de l'inverseur, notamment pour la fixation de la membrane d'obturation qui sera décrite ci-après. Radialement vers l'intérieur, la structure fixe 31 comprend également la paroi 18 de délimitation radialement interne de la veine secondaire 21B.

La structure mobile 29 comprend quant à elle les capots mobiles d'inverseur 33 précités, par exemple deux capots 33 s'étendant chacun sur une amplitude angulaire d'environ 180°. Cette configuration à deux capots 33 est particulièrement bien adaptée dans le cas d'une conception de nacelle dans laquelle les capots/parois 18 sont également montés articulés, de sorte que l'inverseur 30 présente alors une architecture dite « en D », connue sous l'appellation anglo-saxonne « D-Duct ». Dans cette architecture, les capots 18, 33 sont reliés de manière à s'ouvrir / se fermer simultanément lors des opérations de maintenance sur le moteur. Néanmoins, d'autres architectures sont possibles, comme par exemple une architecture dite « en C », connue sous l'appellation anglo-saxonne « C-Duct », ou encore une architecture dite « en O », connue sous l'appellation anglo-saxonne « O-Duct ».

Chaque capot d'inverseur 33 comporte une paroi radialement externe 50' formant une surface aérodynamique externe de nacelle, ainsi qu'une paroi radialement interne 52' participant à la délimitation de la veine secondaire 21B radialement vers l'extérieur.

En plus des capots d'inverseur 33 précités, la structure mobile 29 comprend au moins un ensemble 32' de grilles de déviation 32, celles-ci étant agencées de manière adjacente selon une direction circonférentielle de l'inverseur et de l'ensemble propulsif.

La figure 1 montre l'inverseur 30 dans une configuration de poussée directe. Dans cette configuration, les deux capots mobiles 33 et les deux ensembles de grilles 32' qui leurs sont respectivement associés, sont une position de fermeture, ou position avancée, dite position avancée de poussée directe de la structure mobile 29. Dans cette même position, les grilles 32 sont logées dans un espace délimité radialement vers l'intérieur par le bord de déviation 46', la virole extérieure 40' de carter intermédiaire, et éventuellement par le carter de soufflante 11. Cet espace est aussi délimité radialement vers l'extérieur par les capots de soufflante 14A. En configuration de poussée directe, la structure mobile 29 est en appui axial vers l'avant contre le bord de déviation 46', ce qui permet ainsi de canaliser le flux secondaire 20B vers l'arrière de l'ensemble propulsif 1, de manière à générer une poussée.

La figure 2 montre le même inverseur 30 dans une configuration d'inversion de poussée. Dans cette configuration, les capots d'inverseur mobiles 33 et l'ensemble de la structure mobile 29 sont dans une position d'ouverture, ou position reculée, dans laquelle les capots 33 sont longitudinalement éloignés du bord de déviation 46' de manière à définir une ouverture radiale de la veine secondaire 21B. Les grilles 32 s'étendent à travers cette ouverture radiale. Comme cela sera décrit ultérieurement, dans cette configuration d'inversion de poussée, des moyens spécifiques à l'invention permettent de diriger le flux secondaire 20B vers les grilles 32, lesquelles permettent d'orienter le flux ainsi redirigé vers l'avant de l'ensemble propulsif 1, dans le but de générer la contre-poussée désirée.

Ainsi, sur la figure 2, les grilles 32 et les capots mobiles 33 du système mobile 29 sont représentés dans une position reculée, correspondant à la position reculée d'inversion de poussée de la structure mobile 29. Celle-ci s'avère donc déplaçable en translation par rapport à la structure fixe 31 selon l'axe A1, entre les deux positions représentées sur les figures 1 et 2.

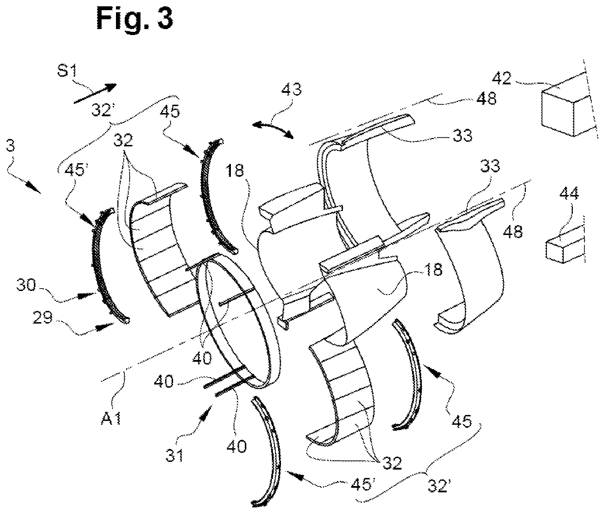

La figure 3 représente une vue éclatée en perspective de certains éléments de la nacelle 3, parmi lesquels une partie de la structure fixe 31 de l'inverseur 30, qui présente une forme générale d'anneau centré sur l'axe A1, correspondant également à l'axe central longitudinal de l'inverseur. Dans ce mode de réalisation préféré de l'invention, la structure fixe 31 est équipée d'éléments de guidage des grilles 32 lors de leur déplacement entre les positions avancée et reculée, ces éléments comprenant des rails axiaux 40. Par exemple, ce sont deux rails 40 solidaires d'une partie supérieure de l'anneau, et deux autres rails 40 solidaires d'une partie inférieure de ce même anneau. Ici, les rails 40 sont fixés à la structure fixe 31 par leur extrémité arrière, tandis que leur extrémité avant est fixée à un autre carter (non représenté sur la figure 3). Les rails 40 assurent ainsi une fonction de guidage des grilles 32 lors du déplacement axial de celles-ci, mais également, en configuration d'inversion de poussée, une fonction de reprise d'efforts aérodynamiques, principalement radiaux et tangentiels.

La figure 3 représente schématiquement les grilles 32, qui se succèdent selon la direction circonférentielle 43. Ici, elles sont regroupées en deux ensembles latéraux comprenant chacun une pluralité de grilles 32, ces deux ensembles étant dénommés ensembles de grilles de déviation 32'.

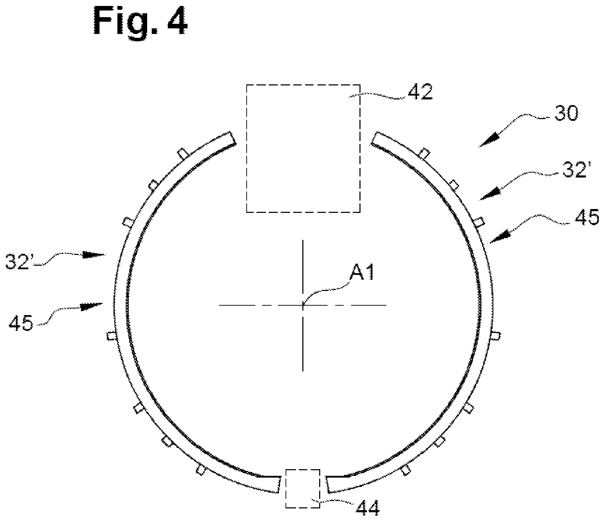

Ainsi, chaque ensemble de grilles 32' comporte plusieurs grilles de déviation 32, et s'étend sur un secteur angulaire proche de 180°. Les deux ensembles 32' sont préférentiellement écartés latéralement l'un de l'autre au niveau de leurs extrémités en regard deux à deux, pour ménager des espaces supérieur et inférieur respectivement dédiés au passage du mât 42 et d'une poutre longitudinale inférieure 44. Chaque ensemble de grilles 32' comporte également une structure arrière 45 de support de grilles, sur laquelle est fixée une extrémité arrière de chacune des grilles de déviation 32 de l'ensemble 32', ainsi qu'une structure avant 45' de support de grilles, sur laquelle est fixée une extrémité avant de chacune de ces grilles de déviation 32 de l'ensemble 32'. Les structures arrière 45 et avant 45' sont également dénommées « cadres arrière et avant de grilles », respectivement, et elles s'étendent chacune circonférentiellement tout le long de leur ensemble latéral 32' associé, selon un secteur angulaire identique ou similaire comme cela est visible sur la figure 4. L'extrémité arrière de chaque grille 32 est donc destinée à être fixée sur sa structure arrière associée 45, par des moyens de fixation conventionnels, de même que l'extrémité avant de chaque grille 32 est destinée à être fixée sur sa structure avant associée 45', toujours à l'aide de moyens conventionnels.

Comme indiqué précédemment, cette configuration est particulièrement bien adaptée dans le cas d'une architecture dite « en D », préférée pour la présente invention.

De manière connue, la structure fixe 31 comporte également des organes (non représentés) formant des butées radiales et/ou tangentielles et/ou axiales pour les grilles 32 des ensembles 32'.

Sur la figure 3, les éléments de la nacelle 3 sont complétés par les capots articulés 18, 33, permettant de conférer l'architecture « en D » à la nacelle. En particulier, il a été représenté l'axe de pivot 48 associé à chaque capot d'inverseur 33, cet axe de pivot 48 étant parallèle ou sensiblement parallèle à l'axe A1, et permettant au capot 33 d'être mobile en rotation entre une position ouverte de maintenance et une position fermée de vol, représentée sur la figure 3.

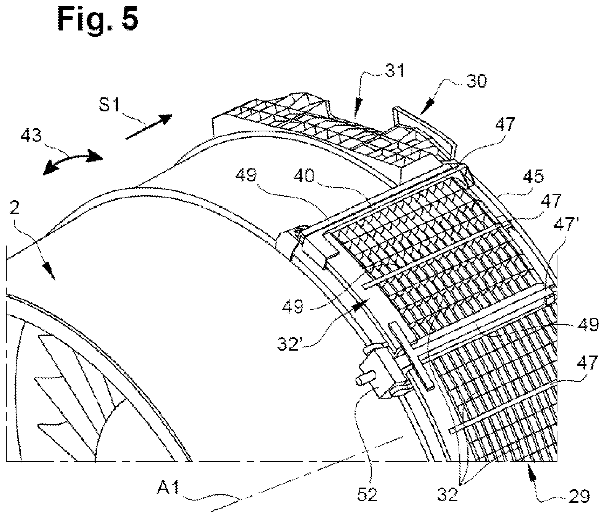

La figure 5 représente de manière plus détaillée une partie de l'un des deux ensembles de grilles 32'. De préférence, les deux ensembles 32' présentent une conception identique ou similaire, en étant symétriques par rapport à un plan vertical et longitudinal passant par l'axe A1. Par conséquent, par la suite, la description qui sera faite s'appliquera indifféremment à chacun de ces deux ensembles 32'.

L'ensemble de grilles 32' comprend des éléments axiaux inter-grilles 47, 47' agencés entre les grilles 32, selon la direction circonférentielle 43 de la nacelle et de son inverseur 30. Ces éléments axiaux inter-grilles 47, 47' s'étendent sur toute ou partie de la longueur axiale de l'ensemble 32', et se trouvent donc agencés entre les grilles 32. Avec leur surface radialement extérieure 49, ces éléments 47, 47' peuvent former des pistes axiales de glissement pour le système mobile 29. De plus, il peut s'agir de plusieurs sortes d'éléments, parmi lesquels des premiers éléments 47 assurant la fonction de jonction mécanique entre les grilles 32, et des seconds éléments 47' remplissant une fonction additionnelle de renfort mécanique pour un actionneur 52 de l'inverseur. Le renfort 47' peut prendre la forme d'un fourreau axial logeant intérieurement au moins une partie de l'actionneur 52. D'autres formes d'éléments de renfort peuvent néanmoins être envisagées, sans sortir du cadre de l'invention. En outre, il est noté que de manière connue, l'extrémité arrière des actionneurs 52 est destinée à être fixée sur la structure arrière de support 45, à l'aide d'organes de fixation dédiés.

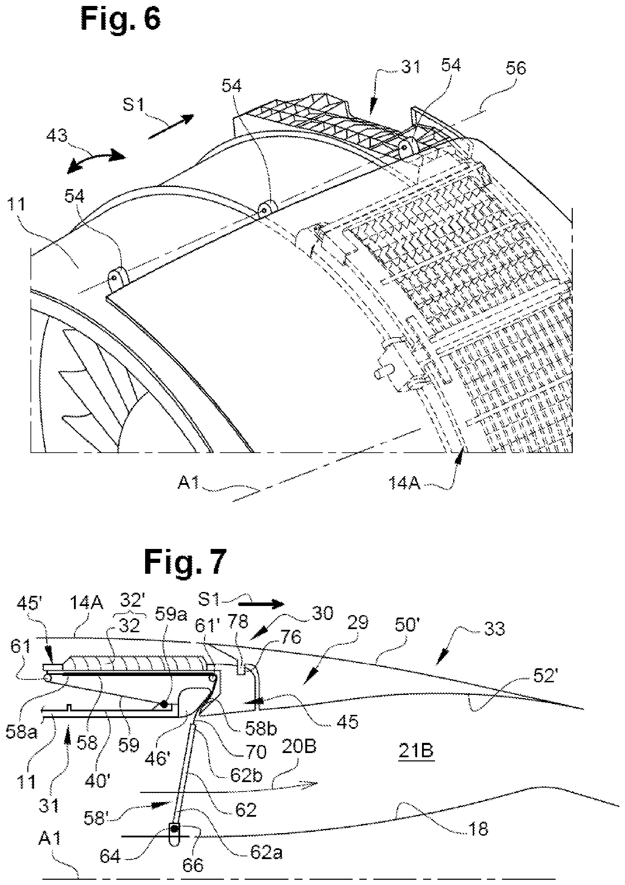

En référence à présent à la figure 6, il est montré l'un des deux capots de soufflante 14A qui présente ici la particularité d'être monté pivotant entre une position ouverte de maintenance, et une position fermée de vol représentée sur cette figure 6. Le montage pivotant est réalisé à l'aide de charnières 54 espacées axialement les unes des autres, et qui définissent conjointement un axe de pivotement 56 du capot 14A. Cet axe 56 est parallèle à l'axe A1, ou sensiblement parallèle à ce dernier. Un montage symétrique est prévu pour le second capot de soufflante pivotant (non représenté sur la figure 6).

Néanmoins, une solution à capots de soufflante fixes est également couverte par la présente invention.

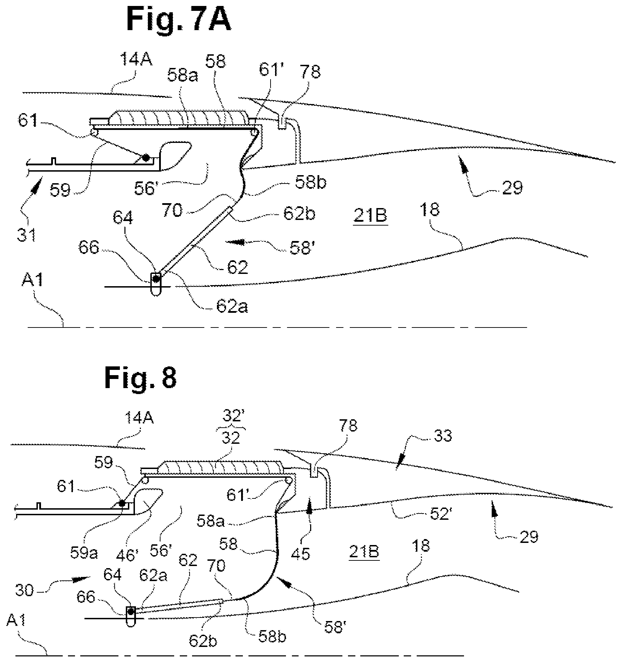

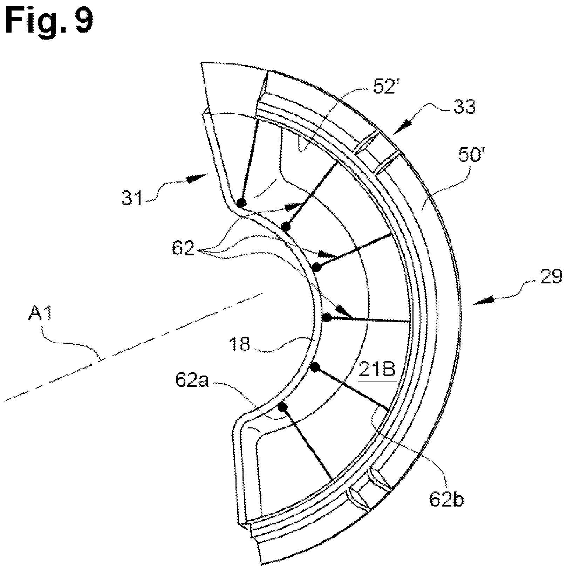

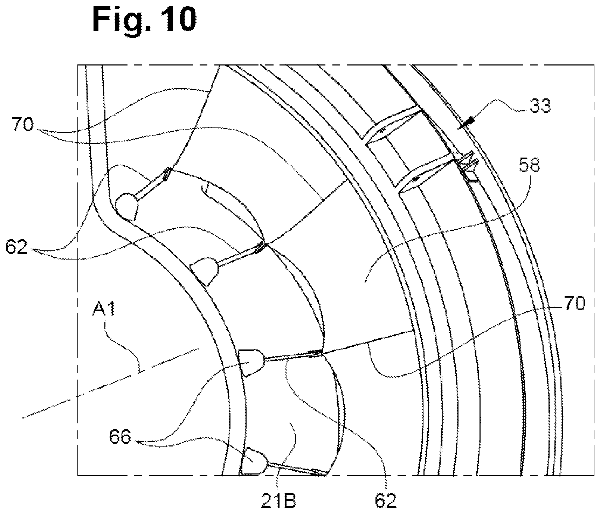

La configuration de poussée directe est également représentée sur les figures 7 et 9, tandis que la position reculée d'inversion de poussée de la structure mobile 29 est aussi représentée sur les figures 8 et 10. La figure 7A montre quant à elle l'inverseur dans une configuration intermédiaire par rapport aux deux précédentes, telle qu'adoptée au cours du déplacement axial vers l'arrière de la structure mobile 29.

Sur la figure 8, il est montré que la paroi radialement interne reculée 52' des capots d'inverseur 33 laisse apparaître en amont une ouverture de passage 56' dans la veine secondaire 21B, vers les grilles de déviation 32. L'ouverture 56' est donc également délimitée vers l'amont par le bord de déviation 46', qui s'évase radialement vers l'extérieur en allant vers l'arrière, pour délimiter un écoulement d'air destiné à traverser la pluralité de grilles 32 lorsque le système mobile 29 se trouve dans cette position reculée d'inversion de poussée. En d'autres termes, le bord de déviation 46' s'éloigne progressivement de l'axe A1 en allant de l'avant vers l'arrière, pour guider / dévier l'air vers la pluralité de grilles 32 en configuration d'inversion de poussée.

Afin de dévier au moins une partie du flux secondaire 20B vers l'ouverture de passage 56' définie axialement entre le bord de déviation 46' et l'extrémité amont de la structure de support arrière 45, l'inverseur 30 comporte une ou plusieurs membranes d'obturation 58 associées à chaque ensemble de grilles de déviation 32'. Pour ce mode, il sera décrit une réalisation dans laquelle une seule membrane 58 est associée à chaque capot d'inverseur 33, et donc à chaque ensemble de grilles de déviation 32', en présentant une amplitude angulaire identique ou similaire à celle du capot. Néanmoins, d'autres modes de réalisation seront présentés avec plusieurs membranes circonférentiellement adjacentes associées à chacun des deux capots 33, et donc à chacun des deux ensembles de grilles 32'.

De même, seule la coopération entre une membrane 58 et son capot associé 33 sera décrite ci-après, étant entendu que cette coopération est identique ou similaire pour les deux capots de l'inverseur 33.

La membrane 58 peut être réalisée dans un matériau connu de l'homme du métier pour ce type d'application. Par exemple, il peut s'agir d'un tissu non imprégné, par exemple de fibres d'aramide. La membrane 58 peut également être réalisée à l'aide d'un matériau composite dont la matrice est particulièrement souple, par exemple en polyuréthane aliphatique ou en silicone. Dans ce cas, la matrice donne une faible capacité de reprise en flexion et le comportement de la structure obtenue est bien celui d'une membrane. L'une des propriétés majeures de cette membrane 58 est de pouvoir se plier de manière parfaitement réversible (élastique ou par glissement de fibres) avec un rayon de courbure très faible par rapport à sa surface, et d'avoir une épaisseur très faible, par exemple de l'ordre de 0,1 à 3 mm. A titre informatif, il est observé que cette membrane 58 se comporte comme une voile de bateau quand elle est mise sous pression.

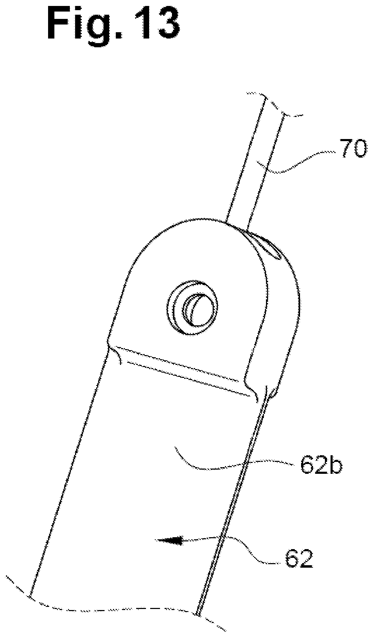

L'une des particularités de l'invention réside dans l'accrochage de la membrane 58 sur l'inverseur 30. Pour ce faire, en référence aux figures 7 à 13, il est prévu des premiers moyens d'accrochage souples reliant une première extrémité 58a de la membrane d'obturation 58 à la structure fixe 31 de l'inverseur, de préférence la virole extérieure de carter intermédiaire 40' ou le bord de déviation 46'. Pour ce faire, les premiers moyens d'accrochage souples comprennent des câbles 59, qui se raccordent fixement sur la première extrémité 58a de la membrane d'obturation 58. Une extrémité de ces câbles 59 est solidaire de premiers moyens de fixation 59a faisant partie intégrante des premiers moyens d'accrochage souples. Ces premiers moyens de fixation 59a sont rapportés directement sur la virole extérieure de carter intermédiaire 40' ou sur le bord de déviation 46', ou encore sur tout autre élément de la structure fixe 31 de l'inverseur 30. Les premiers moyens de fixation 59a, représentés de manière schématique sur les figures, sont réalisés de façon conventionnelle, et donc de préférence agencés sur ou à proximité du bord de déviation 46'.

Les câbles 59, espacés circonférentiellement les uns des autres, coopèrent avec des moyens de guidage avant 61 solidaires et fixés sur la structure avant de support de grilles 45'. Il s'agit ici d'un ou plusieurs galets, d'un ou plusieurs cylindres rotatifs, et/ou d'un ou plusieurs axes fixes, tels que des tringles. Les moyens de guidage avant 61 servent de renvoi pour les câbles 59 dans la position avancée de poussée directe de la structure mobile, puisque ces moyens avant se trouvent en amont et à distance des premiers moyens de fixation 59a. Dans cette position, les câbles 59 partent ainsi vers l'amont et radialement vers l'extérieur en direction des premiers moyens de fixation 59a contre lesquels ils sont en appui et qu'ils contournent, pour ensuite, par effet de renvoi, s'étendre axialement vers l'aval parallèlement à la pluralité de grilles 32, radialement vers l'intérieur par rapport à celles-ci. De plus, toujours dans cette même position, au moins une partie de la membrane 58 s'étend elle aussi le long et parallèlement à la pluralité de grilles 32. Dans le mode de réalisation représenté, la membrane 58 s'étend au-delà des grilles 32, puisqu'elle se trouve en appui et qu'elle contourne des moyens de guidage arrière 61' solidaires et fixés sur la structure arrière de support de grilles 45. Il s'agit ici aussi d'un ou plusieurs galets, d'un ou plusieurs cylindres rotatifs, et/ou d'un ou plusieurs axes fixes, tels que des tringles. Les moyens de guidage arrière 61' servent également de renvoi pour la membrane 58 dans la position avancée de poussée directe de la structure mobile 29, puisque cette membrane s'étend ensuite radialement vers l'intérieur et légèrement vers l'amont, de sorte que sa seconde extrémité 58b soit enserrée / pincée entre l'extrémité amont de la structure de support arrière de grilles 45, et le bord de déviation 46'. Afin d'éviter d'éventuelles dégradations de la membrane 58 du fait de ce pincement, le bord de déviation 46' peut localement présenter une échancrure de forme adaptée pour recevoir l'extrémité amont de la structure de support arrière de grilles 45. Ainsi, la membrane 58 se trouve également plaquée dans cette échancrure du bord de déviation 46', par l'appui de l'extrémité amont de cette structure de support 45.

Les moyens de guidage avant et arrière 61, 61' définissent des axes d'enroulement parallèles entre eux, de préférence orientés tangentiellement en rapport à l'axe A1.

En outre, des seconds moyens d'accrochage relient cette seconde extrémité 58b de la membrane d'obturation 58, opposée à la première membrane 58a, à la paroi 18 de délimitation radialement interne de la veine secondaire 21B. Plus précisément, dans ce mode de réalisation préféré, les seconds moyens d'accrochage comprennent à l'une de leurs extrémités des seconds moyens de fixation 66, directement fixés sur cette paroi 18.

A cet égard, il est noté que cette fixation des moyens 66 s'effectue de préférence en amont de la partie de la paroi 18 qui constitue le capot IFS (de l'anglais « Inner Fixed Structure »), puisque ce capot IFS est destiné à être pivoté avec tout le reste de la porte en « D », pour la réalisation d'opérations de maintenance du moteur. De préférence, cette fixation s'effectue sur une partie de la paroi 18 en amont à proximité ou à forte proximité du capot IFS, comme montré sur les figures 7 et 8. Cette partie amont de la paroi 18 à l'avant du capot IFS, également dénommée par l'expression anglaise « kit engine », fait alors partie intégrante de l'inverseur du fait du raccordement de la seconde extrémité 58b de la membrane d'obturation 58 sur cette même partie amont.

La membrane d'obturation 58 ainsi que ses premiers et seconds moyens d'accrochage associés, agencés respectivement de part et d'autre de celle-ci, forment un ensemble 58' guidé par les moyens de guidage avant et arrière 61, 61', et fixés à la structure fixe 31 par les premiers et seconds moyens de fixation 59a, 66.

Lorsque la structure mobile 29 occupe sa position avancée de poussée directe, au moins une partie de la membrane d'obturation 58 s'étend axialement en étant agencée radialement entre les grilles de déviation 32, et la partie de la structure fixe 31 formée par le carter de soufflante 11, la virole extérieure 40' et le bord de déviation 46'. De préférence, la membrane 58 recouvre radialement l'intégralité et ou très grande partie de la longueur des grilles 32.

Également, comme cela est visible sur la figure 8, lorsque la structure mobile 29 occupe sa position reculée d'inversion de poussée, la membrane d'obturation 58 se trouve en partie en appui contre l'extrémité amont de la structure de support arrière de grilles 45.

Ainsi, la partie de la membrane 58 qui se situe radialement vers l'intérieur par rapport à sa zone d'appui sur la structure 45 obture au moins une partie de la veine secondaire 21B, déviant de la sorte au moins une partie du flux secondaire 20B vers l'ouverture de passage 56', en direction des grilles 32.

En fonctionnement, lorsque la structure mobile 29 se déplace axialement vers l'arrière en direction de sa position reculée d'inversion de poussée, les moyens de guidage avant 61 se rapprochent axialement des premiers moyens de fixation 59a, tandis que le capot 33 et la structure de support arrière 45 s'écartent du bord de déviation 46' vers l'aval, laissant apparaitre l'ouverture de passage 56'. L'ensemble 58' reste en tension entre les moyens de guidage 61, 61', et il se déroule d'une manière telle que la membrane 58, également mise en tension par l'air qui pénètre par l'ouverture 56', se déploie radialement vers l'intérieur dans la veine secondaire 21B. Une configuration de déploiement intermédiaire est visible sur la figure 7A.

Durant au moins une partie du déplacement de la structure mobile 29 vers la position reculée d'inversion de poussée, l'ensemble 58' se déroule avec les premiers moyens d'accrochage souples 59 en appui sur les moyens de guidage avant 61, et se déplaçant par rapport à ceux-ci par glissement ou par roulement sur ces mêmes moyens 61. Simultanément, la membrane d'obturation 58 reste en appui sur les moyens de guidage arrière 61', et se déplace par rapport à ceux-ci par glissement ou par roulement sur ces mêmes moyens 61', jusqu'à être déroulée au maximum dans la veine secondaire 21B, comme cela est montré sur les figures 8 et 10.

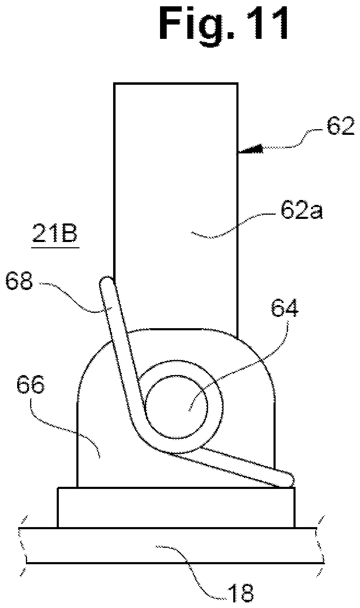

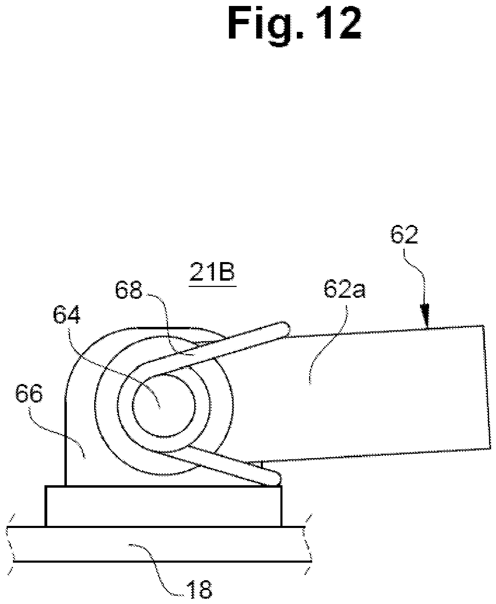

Dans ce mode de réalisation préféré, les seconds moyens d'accrochage comprennent des bielles 62 dont une première extrémité 62a de chacune d'elles est montée sur la paroi 18, de préférence par l'intermédiaire d'une liaison pivot ou rotule 64 montrée plus en détail sur les figures 11 et 12. Cette liaison 64 est réalisée à l'aide de la ferrure 66 fixée sur la paroi fixe 18 et coopérant avec la première extrémité de bielle 62a.

Les bielles 62 sont espacées circonférentiellement les unes des autres au sein de la veine secondaire 21B, et leur nombre peut par exemple varier de deux à dix, en fonction de l'étendue angulaire de la membrane 58.

Chaque bielle 62 est conçue pour se déplacer d'une position en saillie radialement dans la veine secondaire 21B, position montrée sur les figures 7 et 9 et adoptée lorsque la structure mobile 29 occupe sa position avancée de poussée directe, à une position rabattue vers l'aval, montrée sur les figures 8 et 10 et adoptée lorsque la structure mobile 29 occupe sa position reculée d'inversion de poussée. Dans la position en saillie, chaque bielle 62 peut adopter une orientation radiale ou sensiblement radiale en rapport à l'axe A1, tandis que dans la position rabattue, chaque bielle 62 peut adopter une orientation axiale ou sensiblement axiale.

Des moyens élastiques, dits moyens élastiques de rappel 68, tendent à incliner chaque bielle 62 vers sa position rabattue/couchée de la figure 12, en particulier quand la bielle est dans sa position en saillie correspondant à la position de vol de l'inverseur. Ainsi, en début de déploiement de l'inverseur, chaque bielle 62 exerce sur la membrane 58 une poussée vers l'arrière et vers le bas qui la tire dans la veine de façon à ce que l'écoulement en début de transit ne vienne pas coincer la membrane dans le capot de soufflante 33.

La seconde extrémité 62b de chaque bielle 62, opposée à la première extrémité 62a, peut être raccordée directement sur la seconde extrémité 58b de la membrane 58. Néanmoins, d'autres solutions préférentielles sont retenues, comme celles visant à intégrer des câbles au sein des seconds moyens d'accrochage.

Dans le mode de réalisation représenté sur les figures 7 à 13, les câbles 70 coopèrent avec les bielles 62 en étant chacun fixé à la seconde extrémité 62b de l'une des bielles associée à ce câble. Alternativement, les câbles 70 pourraient traverser leurs bielles associées 62 pour être fixés sur la paroi 18 de délimitation radialement interne de la veine secondaire, par exemple via les ferrures 66. Selon encore une autre alternative possible, seuls des câbles 70 pourraient être prévus pour ces seconds moyens d'accrochage, sans les bielles.

De préférence, comme cela est le mieux visible sur la figure 10, les câbles 70 cheminent ensuite sur la membrane 58, sur laquelle ils sont fixés de manière conventionnelle pour renforcer la tenue mécanique de cette membrane. Ces câbles 70 remplissent alors également une fonction d'armature pour la membrane 58, et ils sont préférentiellement espacés circonférentiellement les uns des autres, en étant orientés sensiblement radialement. Toujours de manière préférentielle, chaque câble 70 s'étend le long de la membrane 58 de sa seconde extrémité 58b jusqu'à sa première extrémité 58a, en allant éventuellement au-delà de cette première extrémité 58b, afin de former préférentiellement les câbles 59 des premiers moyens d'accrochage. En d'autres termes, selon une réalisation préférée, ce sont les mêmes câbles 59, 70 qui forment les premiers et seconds moyens d'accrochage, en passant par la membrane 58 qu'ils renforcent mécaniquement.

A cet égard, il est noté que les câbles 59, 70 peuvent présenter toute forme de section, et être réalisés selon une grande variété de matériaux, non nécessairement métalliques.

Les figures 7, 7A et 8 montrent une autre fonctionnalité de la structure arrière 45, qui consiste à réaliser la liaison axiale avec le capot d'inverseur 33 associé, dans sa position fermée de vol. En effet, l'extrémité arrière de la structure 45 comprend un organe de liaison axial 76 en forme de gorge annulaire ouverte radialement vers l'extérieur, coopérant avec un organe de liaison axial complémentaire 78 prévu sur une extrémité avant du capot d'inverseur 33. Cet organe 78 prend de préférence la forme d'une saillie radiale vers l'intérieur, logée dans la gorge 76 pour l'obtention de l'accouplement axial en position fermée du capot 33. Lors de l'ouverture de ce dernier vers sa position ouverte de maintenance, la saillie 78 s'extrait de la gorge 76. Une solution conférant un accouplement additionnel radial pourrait être retenue pour les organes 76, 78, sans sortir du cadre de l'invention. Des efforts radiaux sont également préférentiellement transmis grâce aux organes 76, 78. Dans le mode de réalisation des figures 7, 7A et 8, seuls des efforts radiaux négatifs (de l'extérieur vers l'intérieur) sont transmis. Néanmoins, il pourrait être prévu une liaison capable de transmettre des efforts radiaux dans les deux sens, sans sortir du cadre de l'invention.

Grâce à la présence de la membrane 58 sous la pluralité de grilles 32 en position avancée de poussée directe, et à l'absence de volets conventionnels, la totalité de la longueur du capot d'inverseur 33 peut avantageusement être équipée d'un revêtement acoustique, par exemple sous forme de panneau définissant la paroi radialement interne 52'.

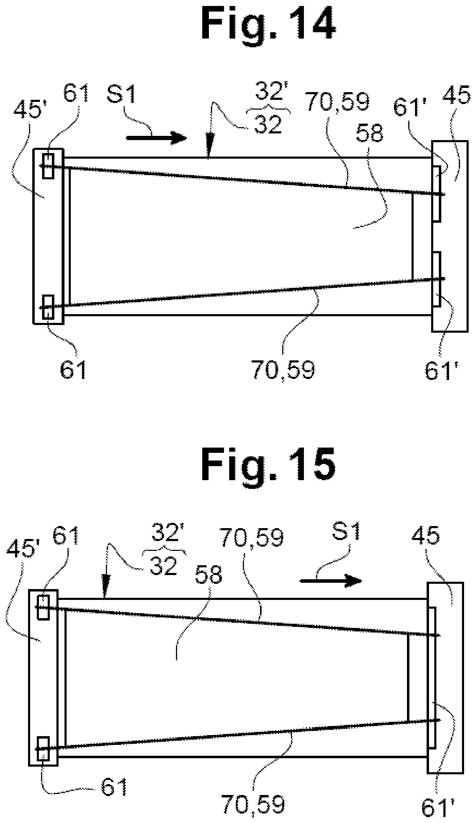

La figure 14 montre un autre mode de réalisation préféré de l'invention, dans lequel plusieurs membranes 58 circonférentiellement adjacentes sont destinées à être associées à chacun des deux capots 33, et donc à chacun des deux ensembles de grilles 32' (une seule membrane étant néanmoins représentée sur ces figures).

Dans ce mode de réalisation préféré, chaque membrane 58 présente, à ses deux extrémités circonférentielles, respectivement deux câbles qui s'étendent axialement au-delà de cette même membrane, de manière à former les câbles 59, 70 des premiers et seconds moyens d'accrochage. Les moyens de guidage avant prennent ici la forme de deux galets 61 guidant respectivement les deux câbles 59, tandis que les moyens de guidage aval 61' prennent la forme de deux rouleaux 61' destinés à guider la membrane 58 et les deux câbles 70. Dans l'alternative montrée sur la figure 15, les deux rouleaux sont remplacés par un rouleau ou une tringle unique 61', de longueur plus importante.

Les membranes 58, qui se succèdent selon la direction circonférentielle, présentent chacune une forme générale trapézoïdale, avec le petit côté orienté vers l'aval dans la configuration de poussée directe représentée sur les figures 14 et 15. Cette forme générale trapézoïdale est destinée à limiter les zones de chevauchement des membranes dans leur configuration déroulée au sein de la veine secondaire, et donc à s'adapter judicieusement au diamètre évolutif de cette veine dans la direction radiale. Néanmoins, d'autres formes sont envisageables pour ces membranes 58, comme une forme globale rectangulaire conduisant à des zones de chevauchement plus importantes à proximité d'un diamètre interne de la veine secondaire, lorsque l'inverseur se trouve en configuration d'inversion de poussée. Des formes particulières peuvent également être adoptées pour les membranes 58 se trouvant à proximité du mât à 12h et de la poutre longitudinale à 6h, afin qu'elles s'adaptent à la géométrie de ces composants de l'ensemble propulsif.

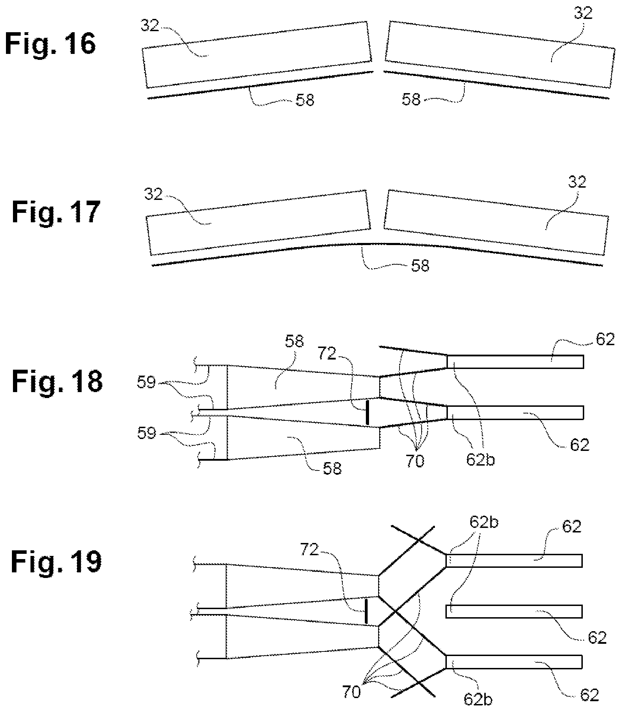

Dans ces modes à pluralité de membranes 58 associées à chaque capot d'inverseur, il est par exemple prévu que chaque membrane 58 s'étende sur une longueur circonférentielle identique ou similaire à celle de l'une des grilles 32 agencée radialement en regard, comme cela a été schématisé sur la figure 16. Mais une étendue supérieure peut être retenue, comme dans l'exemple de la figure 17 où chaque membrane 58 s'étend circonférentiellement le long de deux grilles successives 32.

La figure 18 montre que les membranes adjacentes 58 peuvent être reliées les unes aux autres au niveau de leurs extrémités radialement aval dans la configuration représentée où les membranes sont rentrées, ces extrémités rétrécies étant destinées à former les extrémités radialement internes des membranes 58 en configuration déployée d'obturation. Pour les relier mécaniquement les unes aux autres, des câbles 72 peuvent être employés. Ces câbles 72 peuvent relier les extrémités radialement internes des membranes adjacentes 58, mais également d'autres parties de ces membranes.

L'alternative de la figure 19 montre que les câbles 70 des seconds moyens d'accrochage peuvent s'entrecroiser entre les extrémités radialement aval des membranes 58, et les secondes extrémités 62b des bielles 62. D'ailleurs, il est noté que chaque bielle 62 peut participer à l'accrochage de plusieurs membranes 58, en coopérant par exemple avec deux câbles 70, comme cela est visible sur les modes des figures 18 et 19.

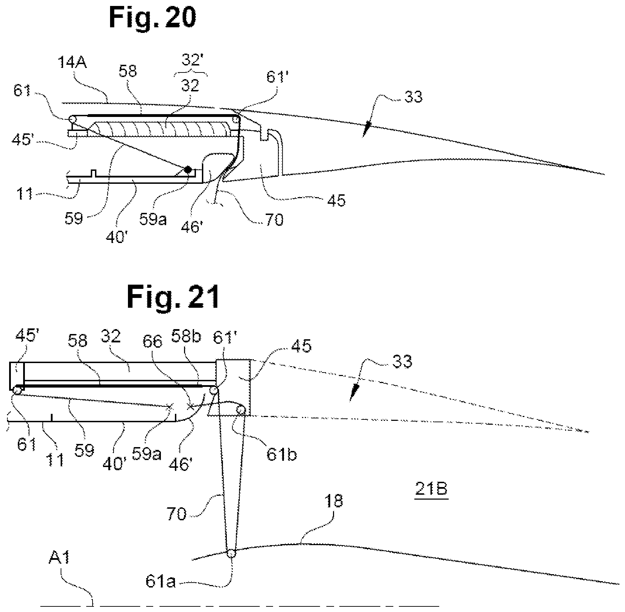

La figure 20 représente un autre mode de réalisation préféré de l'invention, qui contraste avec les précédents par le fait qu'en configuration rentrée de la / des membranes 58, celles-ci recouvrent la pluralité de grilles 32 radialement vers l'extérieur, et non plus vers l'intérieur. De cet exemple, la fixation des extrémités arrière des grilles 32 sur la structure de support arrière 45 ménage des espaces pour le déroulement des membranes 58 radialement vers l'intérieur.

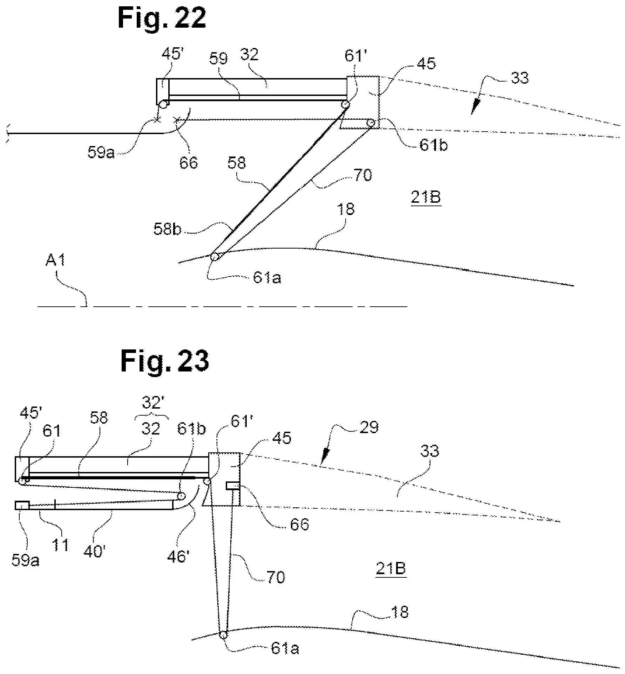

Dans le mode de réalisation des figures 21 et 22, les seconds moyens d'accrochage comprennent les câbles 70, mais plus les bielles 62. Les seconds moyens de fixation 66 ne se trouvent plus sur la paroi de délimitation radialement interne 18 de la veine secondaire 21B, mais à proximité des premiers moyens de fixation 59a, sur la virole extérieure 40' ou sur le bord de déviation 46'. Ainsi, à partir de la seconde extrémité 58b de la membrane 58, les câbles 70 s'enroulent autour des moyens de guidage aval 61', puis s'enroulent autour de moyens de guidage interne 61a fixés sur la paroi 18, après avoir traversé la veine secondaire 21B. Ensuite, vers l'aval, les câbles 70 sont renvoyés radialement vers l'extérieur dans la veine secondaire, pour s'enrouler autour de moyens de guidage additionnels 61b fixés sur la structure de support arrière 45, avant de se raccorder vers l'amont aux seconds moyens de fixation 66. Les moyens de guidage internes et additionnels 61a, 61b, qui servent de renvoi pour les câbles 70 qui les contournent, sont de conception identique ou similaire à celle des moyens de guidage avant et arrière 61, 61'. De plus, ils définissent également des axes d'enroulement parallèles à ceux de tous les autres moyens de guidage précités.

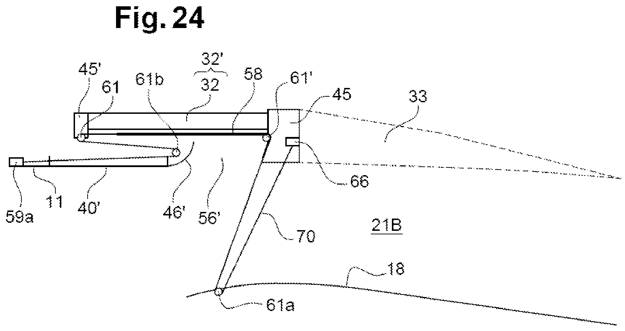

Le mode de réalisation des figures 23 et 24 est similaire au précédent, à l'exception du fait que les moyens de guidage additionnels 61b sont agencés entre les premiers moyens de fixation 59a et les moyens de guidage avant 61, pour guider et renvoyer vers l'amont les câbles 59. D'ailleurs, dans ce mode, les premiers moyens de fixation 59a peuvent être décalés vers l'amont, en étant fixés sur la virole extérieure 40' ou le carter de soufflante. Par exemple, les moyens de guidage additionnels 61b sont fixés sur le bord de déviation 46' ou la virole extérieure 40', en aval des premiers moyens de fixation 59a.

En outre, les seconds moyens de fixation 66 sont fixés sur la structure de support arrière 45, pour recevoir les câbles 70 renvoyés par les moyens de guidage internes 61a. En d'autres termes, dans ce mode de réalisation, les moyens de guidage additionnels 61b sont déplacés vers les premiers moyens d'accrochage et remplacés par les seconds moyens de fixation 66, qui sont donc agencés sur la structure mobile 29 de l'inverseur.

Diverses modifications peuvent être apportées par l'homme du métier à l'invention qui vient d'être décrite, uniquement à titre d'exemples non limitatifs, et dont la portée est définie par les revendications annexées. Par exemple, l'inverseur de poussée 30 peut alternativement présenter une architecture en « C » ou en « O ».

## Revendications

1. Inverseur de poussée (30) pour ensemble propulsif d'aéronef, l'inverseur comprenant une structure fixe (31) équipée d'une paroi de délimitation radialement interne (18) d'une veine secondaire (21B) de l'ensemble propulsif destinée à être traversée par un flux secondaire (20B), l'inverseur comprenant également une structure mobile (29) comportant au moins un capot d'inverseur (33) et au moins un ensemble de grilles de déviation (32'), ledit au moins un ensemble de grilles (32') comprenant une pluralité de grilles de déviation (32) ainsi qu'une structure arrière (45) de support des grilles sur laquelle est fixée une extrémité arrière de la pluralité de grilles de déviation (32), et une structure avant (45') de support des grilles sur laquelle est fixée une extrémité avant de la pluralité de grilles de déviation (32), la structure mobile (29) étant déplaçable en translation par rapport à la structure fixe (31) selon un axe central longitudinal (A1) de l'inverseur, entre une position avancée de poussée directe et une position reculée d'inversion de poussée, l'inverseur de poussée comprenant au moins une membrane d'obturation (58) conçue pour dévier au moins une partie du flux secondaire vers ledit au moins un ensemble de grilles de déviation (32'), lorsque la structure mobile (29) se trouve en position reculée d'inversion de poussée, **caractérisé en ce que** l'inverseur comprend également, associés à ladite au moins une membrane d'obturation (58) :
- des premiers moyens d'accrochage souples (59, 59a) reliant une première extrémité de la membrane (58a) à la structure fixe (31) de l'inverseur, les premiers moyens d'accrochage comprenant à l'une de leurs extrémités des premiers moyens de fixation (59a) sur la structure fixe de l'inverseur,
- des seconds moyens d'accrochage (62, 70) reliant une seconde extrémité (58b) de la membrane, opposée à la première extrémité, à la structure fixe (31) ou à la structure mobile (29), les seconds moyens d'accrochage étant fixés sur la paroi de délimitation radialement interne (18) de la veine secondaire (21B), ou guidés par des moyens de guidage internes (61a) fixés à cette même paroi de délimitation radialement interne (18),
l'ensemble (58') formé par la membrane (58) et les premiers et seconds moyens d'accrochage étant guidé par des moyens de guidage avant (61) solidaires de la structure avant (45') de support de grilles, et guidé par des moyens de guidage arrière (61') solidaires de la structure arrière (45) de support de grilles,
l'inverseur étant réalisé de sorte que dans la position avancée de poussée directe de la structure mobile (29), au moins une partie de la membrane d'obturation (58) s'étend le long de l'ensemble de grilles de déviation (32').

2. Inverseur de poussée selon la revendication 1, **caractérisé en ce que** dans la position avancée de poussée directe de la structure mobile (29), les moyens de guidage avant (61) se trouvent en amont des premiers moyens de fixation (59a) des premiers moyens d'accrochage souples, l'inverseur étant réalisé également de sorte que durant au moins une partie du déplacement de la structure mobile (29) vers la position reculée d'inversion de poussée, ledit ensemble (58') se déroule avec les premiers moyens d'accrochage souples (59) en appui sur les moyens de guidage avant (61), et avec la membrane d'obturation (58) en appui sur les moyens de guidage arrière (61').

3. Inverseur de poussée selon l'une quelconque des revendications précédentes, **caractérisé en ce que** les seconds moyens d'accrochage comprennent des bielles (62) dont une première extrémité (62a) de chacune d'elles est montée sur la paroi de délimitation radialement interne (18) de la veine secondaire (21B), de préférence par l'intermédiaire d'une liaison pivot (64) ou d'une liaison rotule.

4. Inverseur de poussée selon la revendication 3, **caractérisé en ce que** chaque bielle (62) est conçue pour se déplacer d'une position en saillie dans la veine secondaire (21B), adoptée lorsque la structure mobile (29) occupe sa position avancée de poussée directe, à une position rabattue vers l'aval, adoptée lorsque la structure mobile (29) occupe sa position reculée d'inversion de poussée, et **en ce que** des moyens élastiques (68) poussent chaque bielle (62) vers sa position rabattue.

5. Inverseur de poussée selon l'une quelconque des revendications précédentes, **caractérisé en ce que** les moyens de guidage avant, arrière et internes (61, 61', 61a) comprennent au moins un galet, et/ou au moins un cylindre rotatif, et/ou au moins un axe fixe.

6. Inverseur de poussée selon l'une quelconque des revendications précédentes, **caractérisé en ce que** plusieurs membranes d'obturation (58) sont associées à ladite pluralité de grilles mobiles (32), les membranes se succédant selon une direction circonférentielle (43) de l'inverseur.

7. Inverseur de poussée selon l'une quelconque des revendications précédentes, **caractérisé en ce que** les premiers moyens de fixation (59a) des premiers moyens d'accrochage souples sont agencés sur ou à proximité d'un bord de déviation (46') faisant partie intégrante de la structure fixe (31) de l'inverseur.

8. Nacelle (3) pour ensemble propulsif d'aéronef, comprenant au moins un capot de soufflante (14A), ainsi qu'un inverseur de poussée (30) selon l'une quelconque des revendications précédentes.

9. Ensemble propulsif (1) pour aéronef, comprenant une turbomachine (2) et une nacelle (3) selon la revendication précédente.

## Patentansprüche

1. Schubumrichter (30) für ein Flugzeugtriebwerk, wobei der Umrichter eine feste Struktur (31) umfasst, die mit einer radial innenliegenden Begrenzungswand (18) einer Sekundärleitung (21B) des Triebwerks ausgestattet ist, die von einem Sekundärstrom (20B) durchquert werden soll, wobei der Umrichter auch eine bewegliche Struktur (29) umfasst, die mindestens eine Umrichterabdeckung (33) und mindestens eine Baugruppe von Umlenkgittern (32') umfasst, wobei die mindestens eine Baugruppe von Gittern (32') eine Vielzahl von Umlenkgittern (32) sowie eine hintere Gitterträgerstruktur (45), an der ein hinteres Ende der Vielzahl von Umlenkgittern (32) befestigt ist, und eine vordere Gitterträgerstruktur (45'), an der ein vorderes Ende der Vielzahl von Umlenkgittern (32) befestigt ist, umfasst, wobei die bewegliche Struktur (29) in Translation relativ zur festen Struktur (31) entlang einer Längsmittelachse (A1) des Umrichters zwischen einer vorgeschobenen Position des direkten Schubs und einer zurückgezogenen Position der Schubumkehr beweglich ist, wobei der Schubumrichter mindestens eine Verschlussmembran (58) umfasst, die ausgebildet ist, um mindestens einen Teil des Sekundärstroms in Richtung der mindestens einen Baugruppe von Umlenkgittern (32') umzuleiten, wenn sich die bewegliche Struktur (29) in der zurückgezogenen Position der Schubumkehr befindet,
**dadurch gekennzeichnet, dass** der Umrichter in Verbindung mit der mindestens einen Verschlussmembran (58) ferner Folgendes umfasst:
- erste flexible Einhängemittel (59, 59a), die ein erstes Ende der Membran (58a) mit der festen Struktur (31) des Umrichters verbinden, wobei die ersten Einhängemittel an einem ihrer Enden erste Befestigungsmittel (59a) an der festen Struktur des Umrichters umfassen,
- zweite Einhängemittel (62, 70), die ein zweites Ende (58b) der Membran, das dem ersten Ende gegenübersteht, mit der festen Struktur (31) oder der beweglichen Struktur (29) verbinden, wobei die zweiten Einhängemittel an der radial innenliegenden Begrenzungswand (18) der Sekundärleitung (21B) befestigt sind, oder von inneren Führungsmitteln (61a) geführt werden, die an derselben radial innenliegenden Begrenzungswand (18) befestigt sind,
wobei die von der Membran (58) und den ersten und zweiten Einhängemitteln gebildete Baugruppe (58') von vorderen Führungsmitteln (61) geführt wird, die fest mit der vorderen Gitterträgerstruktur (45') verbunden sind, und von hinteren Führungsmitteln (61') geführt wird, die fest mit der hinteren Gitterträgerstruktur (45) verbunden sind,
wobei der Umrichter so ausgebildet ist, dass sich in der vorgeschobenen Position des direkten Schubs der beweglichen Struktur (29) mindestens ein Teil der Verschlussmembran (58) entlang der Baugruppe von Umlenkgittern (32') erstreckt.

2. Schubumrichter nach Anspruch 1, **dadurch gekennzeichnet, dass** sich die vorderen Führungsmittel (61) in der vorgeschobenen Position des direkten Schubs der beweglichen Struktur (29) vor den ersten Befestigungsmitteln (59a) der ersten flexiblen Einhängemittel befinden, wobei der Umrichter auch so ausgeführt ist, dass während mindestens eines Teils der Bewegung der beweglichen Struktur (29) in die zurückgezogene Position der Schubumkehr sich die Baugruppe (58') mit den ersten flexiblen Einhängemitteln (59) in Anlage auf den vorderen Führungsmitteln (61) und mit der Verschlussmembran (58) in Anlage auf den hinteren Führungsmitteln (61') abwickelt.

3. Schubumrichter nach einem der vorhergehenden Ansprüche, **dadurch gekennzeichnet, dass** die zweiten Einhängemittel Verbindungsstangen (62) umfassen, deren erstes Ende (62a) jeweils an der radial inneren Begrenzungswand (18) der Sekundärleitung (21B) angebracht ist, vorzugsweise über eine Schwenkverbindung (64) oder eine Kugelgelenkverbindung.

4. Schubumrichter nach Anspruch 3, **dadurch gekennzeichnet, dass** jede Schubstange (62) so ausgebildet ist, dass sie sich von einer vorstehenden Position in der Sekundärleitung (21B), die eingenommen wird, wenn die bewegliche Struktur (29) ihre vorgeschobene Position des direkten Schubs einnimmt, in eine nach unten geklappte Position, die eingenommen wird, wenn die bewegliche Struktur (29) ihre zurückgeschobene Position der Schubumkehr einnimmt, bewegt, und dass elastische Mittel (68) jede Schubstange (62) in ihre zurückgeklappte Position drücken.

5. Schubumrichter nach einem der vorhergehenden Ansprüche, **dadurch gekennzeichnet, dass** die vorderen, hinteren und inneren Führungsmittel (61, 61', 61a) mindestens eine Rolle und/oder mindestens einen Drehzylinder und/oder mindestens eine feste Achse umfassen.

6. Schubumrichter nach einem der vorhergehenden Ansprüche, **dadurch gekennzeichnet, dass** mehrere Verschlussmembranen (58) mit der Vielzahl von beweglichen Gittern (32) verbunden sind, wobei die Membranen in einer Umfangsrichtung (43) des Umrichters aufeinanderfolgen.

7. Schubumrichter nach einem der vorhergehenden Ansprüche, **dadurch gekennzeichnet, dass** die ersten Befestigungsmittel (59a) der ersten flexiblen Einhängemittel an oder in der Nähe einer Umlenkkante (46') angeordnet sind, die integraler Bestandteil der festen Struktur (31) des Umrichters ist.

8. Gondel (3) für ein Flugzeugtriebwerk, umfassend mindestens eine Gebläseabdeckung (14A) sowie einen Schubumrichter (30) nach einem der vorhergehenden Ansprüche.

9. Triebwerk (1) eines Flugzeugs, umfassend eine Turbomaschine (2) und eine Gondel (3) nach dem vorhergehenden Anspruch.

## Claims

1. Thrust reverser (30) for an aircraft propulsion unit, the reverser comprising a fixed structure (31) fitted with a radially inner delimiting wall (18) of a secondary flow path (21B) of the propulsion unit intended to be passed through by a secondary flow (20B), the reverser also comprising a movable structure (29) including at least one reverser cowl (33) and at least one assembly of cascade vanes (32'), said at least one assembly of vanes (32') comprising a plurality of cascade vanes (32) as well as a rear vane support structure (45) to which a rear end of the plurality of cascade vanes (32) is attached, and a front vane support structure (45') to which a front end of the plurality of cascade vanes (32) is attached, the movable structure (29) being movable in translation relative to the fixed structure (31) along a central longitudinal axis (A1) of the reverser, between a forward direct thrust position and a rearward reverse thrust position,
the thrust reverser comprising at least one sealing membrane (58) designed to divert at least part of the secondary flow towards said at least one assembly of cascade vanes (32'), when the movable structure (29) is in the rearward reverse thrust position,
**characterized in that** the reverser also comprises, associated with said at least one sealing membrane (58):
- first flexible attachment means (59, 59a) connecting a first end of the membrane (58a) to the fixed structure (31) of the reverser, the first attachment means comprising at one of their ends first means (59a) for fixing to the fixed structure of the reverser,
- second attachment means (62, 70) connecting a second end (58b) of the membrane, opposite the first end, to the fixed structure (31) or to the movable structure (29), the second attachment means being fixed to the radially inner delimiting wall (18) of the secondary flow path (21B), or guided by internal guiding means (61a) fixed to this same radially inner delimiting wall (18),
the assembly (58') formed by the membrane (58) and the first and second attachment means being guided by front guiding means (61) integral with the front vane support structure (45'), and guided by rear guiding means (61') integral with the rear vane support structure (45),
the reverser being designed such that in the forward direct thrust position of the movable structure (29), at least part of the sealing membrane (58) extends along the assembly of cascade vanes (32').

2. Thrust reverser according to Claim 1, **characterised in that** in the forward direct thrust position of the movable structure (29), the front guiding means (61) are located upstream of the first fixing means (59a) of the first flexible attachment means, the reverser also being designed such that during at least part of the movement of the movable structure (29) towards the rearward reverse thrust position, said assembly (58') unfolds with the first flexible attachment means (59) bearing on the front guiding means (61), and with the sealing membrane (58) bearing on the rear guiding means (61').

3. Thrust reverser according to one of the preceding claims, **characterised in that** the second attachment means comprise connecting rods (62), a first end (62a) of each of which is mounted on the radially inner delimiting wall (18) of the secondary flow path (21B), preferably by means of a pivot link (64) or a ball joint.

4. Thrust reverser according to Claim 3, **characterised in that** each connecting rod (62) is designed to move from a position projecting into the secondary flow path (21B), adopted when the movable structure (29) is in its forward direct thrust position, to a position folded back downstream, adopted when the movable structure (29) is in its rearward reverse thrust position, and **in that** elastic means (68) push each connecting rod (62) towards its folded back position.

5. Thrust reverser according to one of the preceding claims, **characterised in that** the front, rear and internal guiding means (61, 61', 61a) comprise at least one roller, and/or at least one rotary cylinder, and/or at least one fixed shaft.

6. Thrust reverser according to one of the preceding claims, **characterised in that** a plurality of sealing membranes (58) are associated with said plurality of movable vanes (32), the membranes following one another in a circumferential direction (43) of the reverser.

7. Thrust reverser according to one of the preceding claims, **characterised in that** the first fixing means (59a) of the first flexible attachment means are arranged on or near a deflection edge (46') forming an integral part of the fixed structure (31) of the reverser.

8. Nacelle (3) for an aircraft propulsion unit, comprising at least one fan cowl (14A), as well as a thrust reverser (30) according to one of the preceding claims.

9. Propulsion unit (1) for an aircraft, comprising a turbomachine (2) and a nacelle (3) according to the preceding claim.
